(19) Europäisches Patentamt
European Patent Office
Office européen des brevets

(11) **EP 3 560 047 B1**

(12) **FASCICULE DE BREVET EUROPEEN**

(45) Date de publication et mention de la délivrance du brevet:
**20.01.2021 Bulletin 2021/03**

(21) Numéro de dépôt: **17817705.1**

(22) Date de dépôt: **07.12.2017**

(51) Int Cl.:
**H01S 3/23** *(2006.01)*   **H01S 3/00** *(2006.01)*

(86) Numéro de dépôt international:
**PCT/EP2017/081876**

(87) Numéro de publication internationale:
**WO 2018/114367 (28.06.2018 Gazette 2018/26)**

(54) **CHAINE AMPLIFICATRICE A DERIVE DE FREQUENCE ET A PLUSIEURS SORTIES**

VERSTÄRKERSYSTEM MIT FREQUENZDRIFT UND MEHREREN AUSGÄNGEN

AMPLIFIER SYSTEM WITH FREQUENCY DRIFT AND A PLURALITY OF OUTPUTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2016 FR 1601833**

(43) Date de publication de la demande:
**30.10.2019 Bulletin 2019/44**

(73) Titulaire: **Thales**
**92400 Courbevoie (FR)**

(72) Inventeurs:
• **JOUGLA, Paul**
**78995 Elancourt Cedex (FR)**
• **LAUX, Sébastien**
**78995 Elancourt Cedex (FR)**
• **SIMON-BOISSON, Christophe**
**78995 Elancourt Cedex (FR)**
• **CHARBONNEAU, Mathilde**
**78995 Elancourt Cedex (FR)**

(74) Mandataire: **Marks & Clerk France**
**Immeuble "Visium"**
**22, avenue Aristide Briand**
**94117 Arcueil Cedex (FR)**

(56) Documents cités:
**US-A1- 2005 265 407    US-A1- 2013 223 460**

**Description**

Le domaine de l'invention est celui des chaînes amplificatrices à dérive de fréquence et à plusieurs sorties.

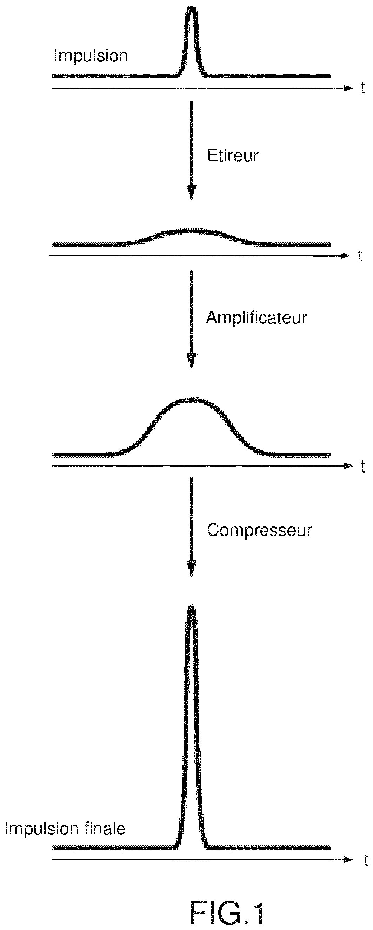

On rappelle qu'une chaîne amplificatrice à une sortie comporte en entrée un étireur ayant pour fonction d'étirer temporellement une impulsion laser avec un taux d'étirement tx_etirement, l'impulsion étirée étant alors amplifiée par un amplificateur puis compressée par un compresseur temporel de taux de compression tx_compression = tx_etirement, placé dans une enceinte à vide, comme illustré figure 1. On trouve parfois dans la littérature tx_compression = - tx_etirement par convention, convention non retenue dans la suite. Le compresseur a pour fonction de compenser l'étirement de l'étireur. L'étireur et les compresseurs comportent typiquement des réseaux de diffraction.

Des exemples de chaînes amplificatrices à dérive de fréquence sont divulguées dans US2013/0223460 A1 et US2005/0265407 A1.

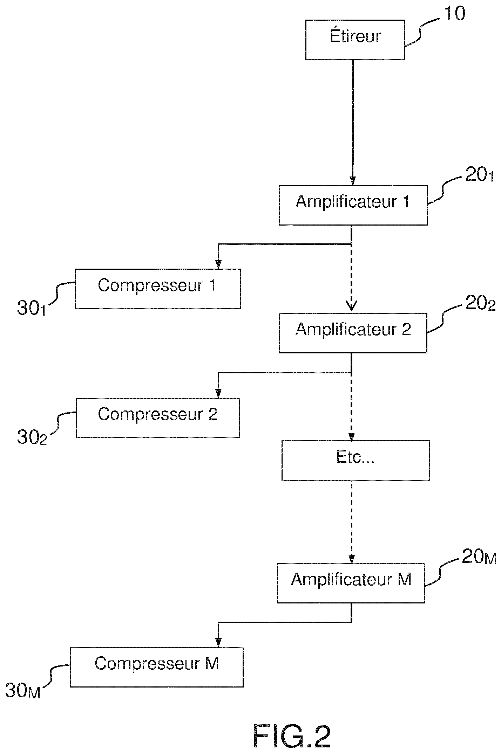

Une chaîne amplificatrice à M sorties comporte en sortie de l'étireur 100, M amplificateurs en cascade, chaque amplificateur $20_i$ i variant de 1 à M étant associé à son propre compresseur (il y a donc M compresseurs $30_i$), l'ensemble des sorties de chaque compresseur formant les M sorties de la chaîne, comme illustré figure 2. A la sortie de chaque amplificateur laser, le faisceau laser peut être envoyé vers le compresseur associé audit amplificateur, ou vers l'amplificateur suivant.

Le long du parcours de l'impulsion à travers une chaîne amplificatrice, l'impulsion doit respecter certaines contraintes dont les paramètres de fluence et d'énergie de chaque élément optique, ce qui amène à définir pour chaque élément optique un diamètre minimal de faisceau incident. Dans le cas d'une chaîne amplificatrice à plusieurs sorties, cela signifie que plus il y a d'amplificateurs, plus ce diamètre minimal de faisceau augmente (l'étalement spatial du faisceau augmente) au fur et à mesure de la position de l'amplificateur dans la cascade, et plus les dimensions de l'amplificateur concerné augmentent. Les dimensions de chaque élément étant calculées au plus juste en fonction de ce diamètre, notamment pour des raisons d'encombrement et de coût, cela revient à augmenter les dimensions de l'élément optique ainsi donc que son coût. Le diamètre minimal est le plus important en fin de chaîne c'est-à-dire en entrée du compresseur de sortie n°M. Le dernier compresseur sur la dernière sortie reçoit une impulsion laser de forte énergie et donc de grand diamètre pour garantir la tenue au flux laser des réseaux utilisés dans ce compresseur. Pour limiter le vignettage du faisceau laser dans ce compresseur les réseaux sont éloignés les uns des autres, ce qui se traduit par une augmentation du taux de compression qui dès lors n'est plus égal au taux d'étirement de l'étireur (qui avait été calculé pour la tenue au flux des optiques des amplificateurs laser sans tenir compte de ce vignettage). On rappelle en effet que le taux de compression est proportionnel à la distance entre les réseaux. Comme le taux d'étirement doit être égal au taux de compression afin de retrouver en sortie la durée d'impulsion limitée par la transformée de Fourier, l'étireur doit être adapté à ce dernier compresseur et doit avoir un taux d'étirement égal au taux de compression du dernier compresseur (compresseur n°M). Il est par la suite nécessaire d'adapter tous les compresseurs intermédiaires (compresseur n°1 à M-1) au taux d'étirement de l'étireur. La distance entre leurs réseaux devient plus importante que s'ils étaient utilisés comme sortie unique, ce qui contraint à augmenter les dimensions de leurs réseaux et de leur enceinte à vide.

On va illustrer ce problème dans l'exemple suivant avec de très fortes énergies et de fortes puissances.

On considère par exemple une chaîne à deux sorties avec un étireur de taux d'étirement égal à 10ps/nm, une énergie de 25 J en sortie de l'amplificateur n°1, une puissance de 1 PW en sortie du compresseur n°1, une énergie de 250 J en sortie de l'amplificateur n°2, une puissance de 10 PW en sortie du compresseur n°2.

Les réseaux de diffraction que comporte chaque compresseur ont typiquement une tenue au flux de l'ordre de 200mJ/cm$^2$. Chaque compresseur est donc dimensionné pour travailler avec une fluence moyenne de 100mJ/cm$^2$ afin d'avoir de la marge de sécurité et ne pas risquer d'être endommagé.

Avec de telles hypothèses cela nécessite un compresseur n°2 très volumineux, pour lequel il faut écarter les différents réseaux de diffraction afin d'éviter tout vignettage. Le taux de compression d'un tel compresseur devient important, typiquement 14 ps/nm, différent du taux d'étirement. Il faut alors revoir la configuration de l'ensemble de la chaîne.

Une première solution consiste à utiliser un compresseur n°1 de même taux de compression que le compresseur n°2, ce taux de compression étant égal au taux d'étirement, soit 14 ps/nm dans notre exemple. Pour cela les réseaux de diffraction du compresseur n°1 sont plus éloignés que pour un taux d'étirement de 10ps/nm ; ils doivent donc être plus grands. L'enceinte à vide du compresseur n°1 doit être elle aussi plus volumineuse.

Une autre solution consiste à utiliser des compresseurs de taux de compression différents, par exemple 10 ps/nm pour le compresseur n°1, 14 ps/nm pour le compresseur n°2 et à modifier le taux d'étirement de l'étireur en fonction de la sortie envisagée, par exemple en motorisant le deuxième réseau de l'étireur. Or l'étireur est un élément critique.

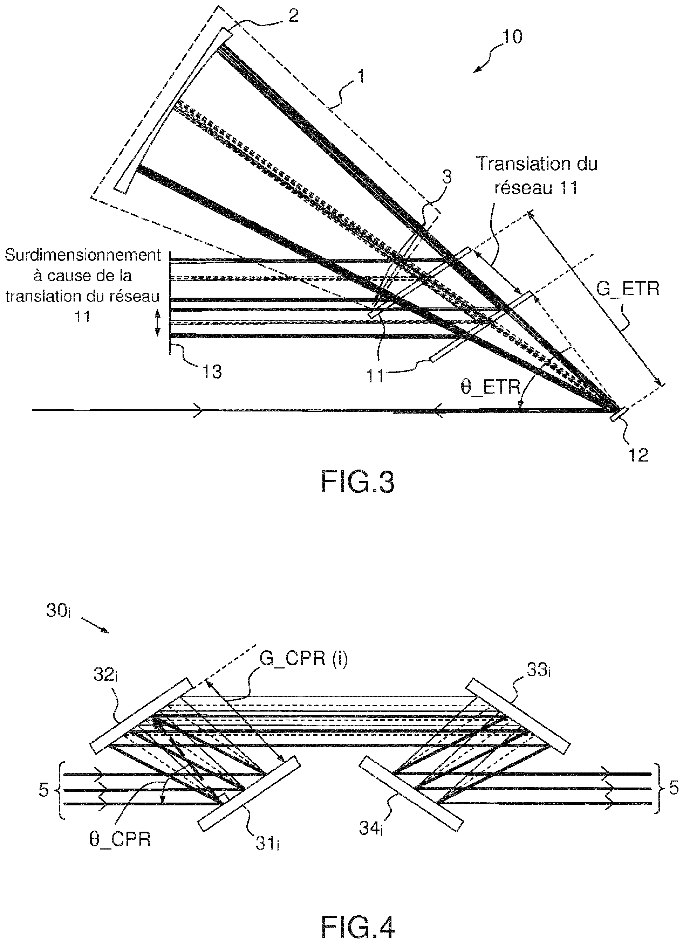

Un exemple d'étireur 10 à réseaux de diffraction est montré figure 3 ; il s'agit d'un étireur comportant un triplet d'Offner 1 et deux réseaux de diffraction 11, 12 parallèles entre eux. Dans cette configuration, l'optique que constitue le triplet d'Offner est composé d'un miroir concave 2 et d'un miroir convexe 3 dont le rayon de courbure vaut la moitié de celui du concave. Ces miroirs sont placés dans une géométrie concentrique. Le triplet d'Offner produit une image de la même taille que l'objet. Il est placé sur le trajet que parcourent les impulsions entre les deux réseaux de diffraction 11, 12 inclinés. On peut faire subir un ou plusieurs passages (noté nbre_pass_ETR dans la suite) dans l'étireur au moyen d'un prisme de repli (dièdre 13) comme montré sur la figure. La quantité de dispersion introduite par l'étireur est déterminée par la distance G_ETR entre les deux réseaux 11, 12.

Lors de la translation motorisée d'un des deux réseaux, ceux-ci doivent rester parallèles l'un à l'autre pour ne pas introduire d'aberrations chromatiques. Leurs traits gravés doivent aussi rester parallèles l'un par rapport à l'autre : les traits d'un réseau sont parallèles aux traits de l'autre réseau.

Comme on le voit sur la figure 3, il faut donc translater le plus grand des deux réseaux (le réseau 11) donc le plus lourd, avec une très bonne stabilité en roulis/lacet/tangage.

Le passage rapide d'une sortie à l'autre peut donc nécessiter une reprise du réglage de l'étireur, et donc un contrôle des aberrations chromatiques en sortie d'étireur. Une telle procédure prend du temps. On voit aussi sur la figure 3 qu'il faut surdimensionner le dièdre 13 de manière non négligeable.

En conséquence, il demeure à ce jour un besoin pour une chaîne amplificatrice à dérive de fréquence et à plusieurs sorties donnant simultanément satisfaction à l'ensemble des exigences précitées, en termes de stabilité de réglage, de facilité de fonctionnement, d'encombrement et de coût.

Plus précisément l'invention a pour objet une chaîne amplificatrice d'une impulsion, à dérive de fréquence à M sorties, avec M>1, qui comprend :

- un étireur de taux d'étirement tx_etirement,
- M amplificateurs en cascade,
- M compresseurs de sortie, respectivement placés en sortie de chaque amplificateur.

Elle est principalement caractérisée en ce qu'elle comprend :

- un dispositif de compression partielle placé entre l'étireur et le premier amplificateur, ce dispositif de compression partielle ayant au moins un taux de compression partielle, le (ou les) taux de compression partielle étant inférieur(s) à tx_etirement, et
- un commutateur optique configuré pour recevoir un faisceau de sortie de l'étireur et le diriger directement vers le premier amplificateur de la cascade ou vers le dispositif de compression partielle en fonction d'un compresseur de sortie choisi parmi les compresseurs de sortie.

Ce dispositif de compression partielle qui est placé entre l'étireur et l'amplificateur n°1, permet d'adapter le taux d'étirement au taux de compression des différents compresseurs de sortie.

Le faisceau sortant de l'étireur est envoyé au moyen du commutateur optique, soit vers le dispositif de compression partielle, soit directement vers l'amplificateur n°1. L'utilisateur passe donc rapidement d'un mode de fonctionnement à l'autre, sans reprise des réglages de l'étireur comme dans l'art antérieur.

Cela permet à la fois d'éviter de motoriser un composant diffractif de l'étireur et d'obtenir des compresseurs intermédiaires (1 à M-1) aussi compacts que possible.

Lorsque M>2, le dispositif de compression partielle peut comporter un compresseur partiel à taux de compression réglable, par exemple obtenu par motorisation d'un des réseaux de diffraction pour un compresseur partiel à réseaux de diffraction.

Selon une alternative, lorsque M>2, le dispositif de compression partielle comporte L compresseurs partiels, 1<L<M chaque compresseur partiel ayant un taux de compression constant.

La chaîne amplificatrice selon l'invention est typiquement configurée pour amplifier une impulsion d'une durée inférieure à 100 fs.

Un dispositif de compression partielle est placé entre l'étireur et l'amplificateur n°1. Il permet d'adapter le taux d'étirement aux taux de compression des différents compresseurs de sortie. Les sorties intermédiaires (1 à M-1) sont ainsi optimisées en encombrement. Cela permet à la fois d'éviter de motoriser un composant diffractif de l'étireur et d'obtenir des compresseurs aussi compacts que possible.

L'invention a aussi pour objet un procédé d'utilisation d'une chaîne amplificatrice d'une impulsion selon l'une des revendications précédentes, caractérisé en ce qu'il comporte les étapes suivantes :

- étirement de l'impulsion par l'étireur,
- en fonction d'un compresseur de sortie choisi parmi lesdits compresseurs de sortie, envoi de l'impulsion au dispositif de compression partielle par le commutateur optique ou passage direct à l'étape suivante,
- envoi de l'impulsion dans la cascade des amplificateurs à partir du premier amplificateur jusqu'à l'amplificateur associé au compresseur de sortie choisi,

- envoi de l'impulsion vers ledit compresseur de sortie choisi.

Le faisceau sortant de l'étireur peut être envoyé au moyen du commutateur optique, soit vers le dispositif de compression partielle, soit directement vers l'amplificateur n°1. L'utilisateur passe donc rapidement d'un mode de fonctionnement à l'autre, sans reprise des réglages de l'étireur comme dans l'art antérieur.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement une chaîne amplificatrice à dérive de fréquence et à une sortie selon l'état de la technique,

la figure 2 déjà décrite représente schématiquement une chaîne amplificatrice à dérive de fréquence et à plusieurs sorties selon l'état de la technique,

la figure 3 déjà décrite représente schématiquement un exemple d'étireur selon l'état de la technique,

la figure 4 représente schématiquement un exemple de compresseur selon l'état de la technique,

la figure 5 représente schématiquement une chaîne amplificatrice à dérive de fréquence et à plusieurs sorties selon l'invention,

la figure 6 représente schématiquement un exemple de compresseur partiel à taux constant d'une chaîne amplificatrice selon l'invention,

la figure 7 représente schématiquement un premier exemple de compresseur partiel à taux réglable et à dièdre de repli d'une chaîne amplificatrice selon l'invention,

la figure 8 représente schématiquement un deuxième exemple de compresseur partiel à taux réglable et à deux paires de réseaux d'une chaîne amplificatrice selon l'invention.

D'une figure à l'autre, les mêmes éléments sont repérés par les mêmes références.

Comme indiqué en préambule une chaîne amplificatrice comporte essentiellement un étireur, un amplificateur, un compresseur. On considère un étireur et des compresseurs à réseaux de diffraction.

Etireur et compresseur se ressemblent : l'étireur est un compresseur avec une distance équivalente négative entre ses réseaux de diffraction produite par un système optique de grandissement -1, d'où la convention citée en préambule.

Un exemple d'étireur 10 à deux réseaux de diffraction 11, 12 est montré figure 3.

On peut aussi utiliser un étireur à un seul réseau de diffraction. Le principe d'un étireur à un seul réseau est le même, mais le réseau unique est éloigné du centre de courbure du triplet d'Offner.

L'étireur 10 est caractérisé parles paramètres géométriques suivants :

- La distance entre les 2 réseaux : G_ETR. Dans le cas d'un étireur avec un seul réseau de diffraction, G_ETR vaut deux fois la distance entre le réseau de diffraction et le centre de courbure du triplet d'Offner.
- L'angle d'incidence sur le 1er réseau 12 (ou sur le réseau unique) : θ_ETR.
- La densité de traits de chaque réseau : N_ETR.

Comme déjà indiqué, on peut faire subir 1 ou plusieurs passages dans l'étireur.

Le taux d'étirement vaut :

$$tx\_etirement = \frac{2 \cdot G\_ETR \cdot \lambda 0 \cdot N\_ETR^2 \cdot \text{nbre\_pass\_ETR}}{c \cdot cos^3(\theta d\_ETR)}$$

avec :

$\lambda 0$=longueur d'onde moyenne du spectre de l'impulsion,

c=vitesse de la lumière,

$\theta d\_ETR$ l'angle diffracté d'ordre 1 par le premier réseau 12 (ou le réseau unique) pour la longueur d'onde $\lambda 0$, qui est donné par la formule :

$$\sin(\theta d\_ETR)+\sin(\theta\_ETR)=\lambda 0 \, N\_ETR$$

Le schéma de principe d'un compresseur $30_i$ est montré figure 4. Il comporte deux paires de réseaux de

diffraction $31_i$, $32_i$, et $33_i$, $34_i$. Les quatre réseaux ont tous le même nombre de traits par mm. Les réseaux $31_i$ et $34_i$ ont les mêmes dimensions ; de même pour les réseaux $32_i$ et $33_i$, mais les dimensions de ces derniers peuvent être supérieures à celles des réseaux $31_i$ et $34_i$. L'impulsion incidente 5 sur le premier réseau $31_i$ est diffractée vers le deuxième réseau $32_i$ parallèle au premier. Elle est diffractée par ce deuxième réseau qui l'envoie vers un troisième réseau $33_i$ qui la diffracte vers un quatrième réseau $34_i$. En sortie de ce 4è réseau $34_i$, la durée de l'impulsion 5 est compressée.

Les paramètres géométriques d'un compresseur sont :

- la distance entre les 2 réseaux de chaque paire : G_CPR,
- l'angle d'incidence sur le 1er réseau : θ_CPR,
- la densité de traits des réseaux : N_CPR.

Le taux de compression vaut :

$$tx\_compression = \frac{2 \cdot G\_CPR \cdot \lambda 0 \cdot N\_CPR^2}{c \cdot cos^3(\theta d\_CPR)}$$

- θd_CPR l'angle diffracté par le premier réseau pour la longueur d'onde λ0, est donné par la formule :

$$sin(\theta d\_CPR) + sin(\theta\_CPR) = \lambda 0\ N\_CPR$$

La phase spectrale de l'étireur et du compresseur sont exactement opposées si :

$$G\_CPR = G\_ETR \times nbre\_pass\_ETR$$

$$\theta\_CPR = \theta\_ETR$$
$$N\_CPR = N\_ETR.$$

Dans le cas idéal où aucun matériau dispersif n'est placé dans la chaine d'amplification la phase spectrale est nulle et la durée de l'impulsion laser est limitée par la transformée de Fourier, qui est son minimum théorique. Bien évidemment le faisceau laser d'une chaîne d'amplification traverse des matériaux dispersifs, par exemple les cristaux d'amplification. Mais le taux d'étirement des éléments dispersifs est négligeable devant le taux d'étirement de l'étireur ou des compresseurs ; on néglige ici ce taux d'étirement (ou de manière équivalente la phase spectrale) apportée par ces éléments dispersifs.

Selon l'invention, un dispositif 50 de compression partielle est placé entre l'étireur 10 et l'amplificateur n°1 ($20_1$).

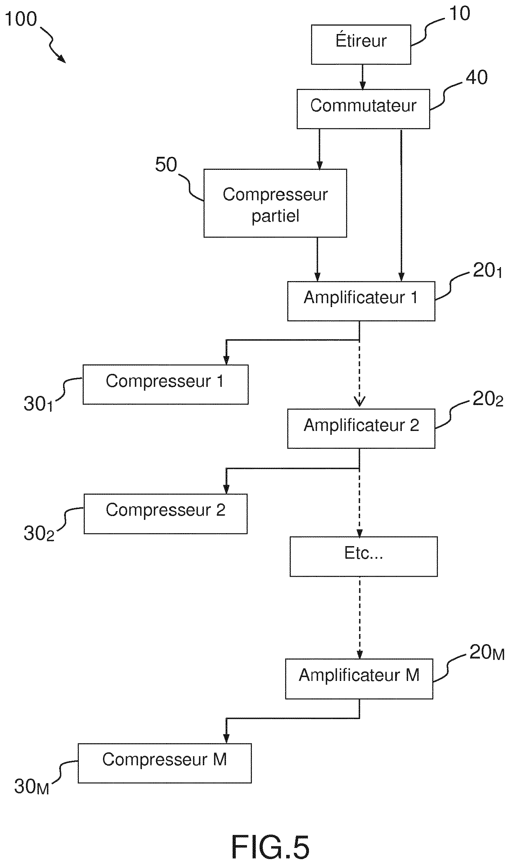

On décrit en relation avec la figure 5 un exemple de chaîne amplificatrice 100 à dérive de fréquence et à M sorties selon l'invention.

Elle comprend :

- un étireur 10, relié à un
- commutateur optique 40, relié à

  - un dispositif de compression partielle 50 qui a pour fonction de pourvoir adapter le taux d'étirement au taux de compression de chaque compresseur de sortie, et
  - à un premier amplificateur $20_1$ associé à un premier compresseur de sortie $30_1$,

- d'autres amplificateurs $20_2$, ..., $20_M$, tous les amplificateurs $20_1$, ..., $20_M$ étant disposés en cascade, chaque autre amplificateur $20_2$, ..., $20_M$ étant associé à un autre compresseur de sortie $30_2$, ..., $30_M$. Les taux de compression des compresseurs de sortie sont croissants, le dernier compresseur M ayant le taux de compression maximal.

Selon la sortie choisie, l'impulsion laser en sortie d'un amplificateur $20_1$, ..., $20_{M-1}$ est dirigée soit vers le compresseur associé à cet amplificateur, soit vers l'amplificateur suivant, par un commutateur optique (non représenté sur la figure) placé en sortie de chaque amplificateur, sauf pour le dernier.

Le commutateur optique 40 (ainsi éventuellement que les commutateurs en sortie des amplificateurs) est un invariant optique. Il peut être un système à miroirs escamotable qui comprend deux miroirs parallèles montés sur un même élément de translation motorisé, ou un miroir monté sur une platine de rotation pour adresser le compresseur partiel ou l'éviter. Ainsi le dispositif de compression partielle peut être sélectionné ou évité en fonction de la position de ce système à miroirs.

Plusieurs configurations sont envisagées pour le dispositif de compression partielle 50, selon les taux de compression des compresseurs de sortie.

On définit :

- tx_étirement_tenue_flux: taux d'étirement minimum de l'étireur 10, nécessaire pour la tenue au flux des optiques de la chaîne amplificatrice laser.
- tx_étirement(i) le taux d'étirement de l'étireur 10, nécessaire pour à la fois limiter le vignettage sur le compresseur n°i (compresseur $30_i$), et garantir la tenue au flux des optiques de la chaîne amplificatrice laser en amont de ce compresseur n°i ; on a donc :

  tx_étirement(i)> tx_étirement_tenue_flux et comme l'énergie reçue par le compresseur n°i est supérieure à l'énergie reçue par le compresseur n° i-1 (compresseur $30_{i-1}$), on a :
  tx_étirement(i) $\geq$ tx_étirement(i-1).

Concernant le compresseur n°M, c'est le vignettage qui contraint la distance entre les réseaux de ce compresseur n° M (compresseur $30_M$), plus que la tenue au flux des optiques des différents amplificateurs laser $20_1$ à $20_M$. - tx_étirement_max = max [tx_étirement(i)] = tx_étirement(M).

Le taux d'étirement de l'étireur 10 vaut tx_étirement_max. - tx_compression_partiel, le taux de compression du dispositif 50 de compression partielle, qui est un paramètre à optimiser.

Pour les sorties i qui vérifient :

tx_étirement(i)$\leq$ tx_étirement_max - tx_compression_partiel
le faisceau laser en sortie d'étireur 10 est dirigé vers le dispositif 50 de compression partielle par le commutateur optique 40.

Pour les autres sorties (telles que tx_étirement(i)> tx_étirement_max - tx_compression_partiel), le faisceau laser en sortie de l'étireur 10, est dévié par le commutateur optique 40 pour éviter le dispositif de compression partielle 50 ; il est directement dévié vers l'amplificateur n°1. C'est le cas notamment pour la dernière sortie (= sortie du compresseur n° M).

Ainsi, l'impulsion laser passe d'abord dans l'étireur 10. Suivant la sortie n° i qui est utilisée, i variant de 1 à M, soit l'impulsion est envoyée dans le dispositif de compression partielle 50, soit elle est envoyée directement à l'étape suivante.

L'impulsion laser passe ensuite dans la série des amplificateurs $20_1$ jusqu'à $20_i$. Elle est ensuite déviée vers le compresseur $30_i$. Elle ne passe pas dans l'amplificateur $20_{i+1}$.

Les différents compresseurs des différentes sorties ont des paramètres géométriques équivalents à ceux de l'étireur : $\theta$\_CPR(i) et N_CPR(i) sont proches des paramètres $\theta$\_ETR et N_ETR de l'étireur. Ils sont égaux en théorie mais proches en pratique compte tenu des matériaux dispersifs (des cristaux d'amplification par exemple) entre étireur et compresseurs. Leur distance inter réseaux G_CPR(i) est adaptée au taux de compression souhaité.

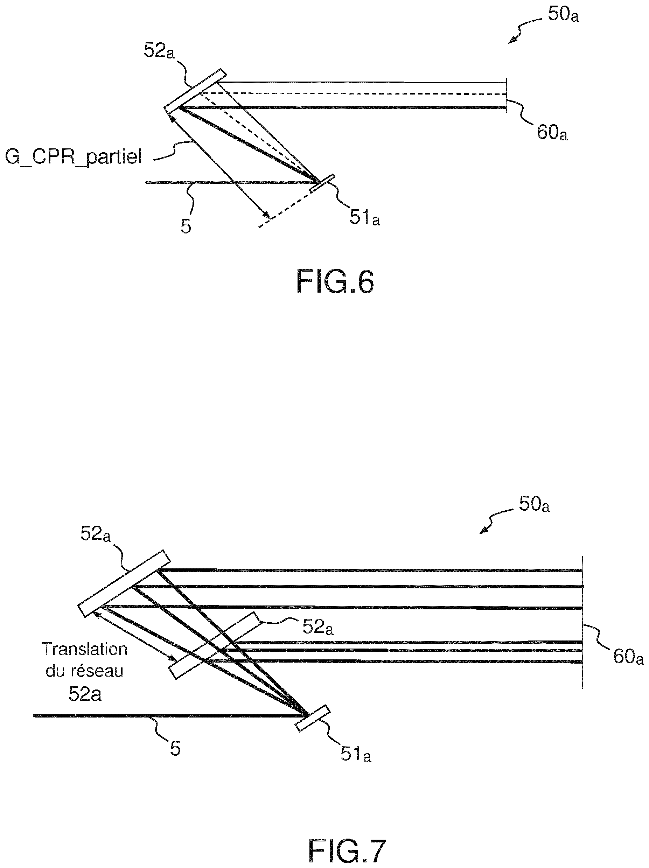

Le dispositif de compression partielle est par exemple un compresseur de Treacy 50a décrit en relation avec la figure 6 avec des paramètres géométriques équivalents à ceux des autres compresseurs $30_i$ et de l'étireur 10 : même $\theta$\_CPR, même N_CPR. Il comprend :

Un premier réseau de diffraction 51a, un deuxième réseau de diffraction 52a.
Les réseaux 51a et 52a ont le même nombre de traits, ils sont parallèles et leurs traits sont parallèles entre eux. Ils peuvent être de taille différente, typiquement la largeur de 52a est plus grande que celle de 51a. Un dièdre 60a permet de renvoyer les rayons laser vers 52a et de changer leur hauteur. Les rayons laser passent donc dans l'ordre sur 51a, 52a, 60a, 52a, 51a.

La distance G_CPR_partiel(i) est de l'ordre de :

$$\text{G\_CPR\_partiel(i)= G\_ETR x nbre\_pass\_ETR - G\_CPR(i).}$$

On en déduit le taux de compression du compresseur partiel : tx_compression_partiel. On peut aussi écrire :

tx_compression_partiel (i)= tx_étirement(M)- tx_étirement(i).

Lorsque les compresseurs de sortie intermédiaires n° 1 à M-1 ($30_1$ à $30_{M-1}$) ont tous le même taux de compression, le dispositif de compression partielle 50 comporte typiquement un seul compresseur partiel 50a de taux de compression constant dont un exemple est montré figure 6.

Lorsque les compresseurs n° 1 à M-1 n'ont pas tous le même taux de compression (avec des taux de compression croissants), le dispositif de compression partielle 50 peut comporter plusieurs compresseurs partiels, typiquement autant que de compresseurs $30_i$ à taux de compression différents. Le taux de compression partielle de chacun de ces compresseurs partiels est constant et déterminé en fonction du (ou des) compresseur(s) de sortie lui correspondant. Ces compresseurs partiels sont disposés en parallèle.

Selon une alternative, le dispositif de compression partielle 50 comporte un (voire plusieurs) compresseur partiel à taux de compression réglable en fonction du compresseur de sortie correspondant. Ce taux réglable est par exemple obtenu en utilisant un compresseur dont :

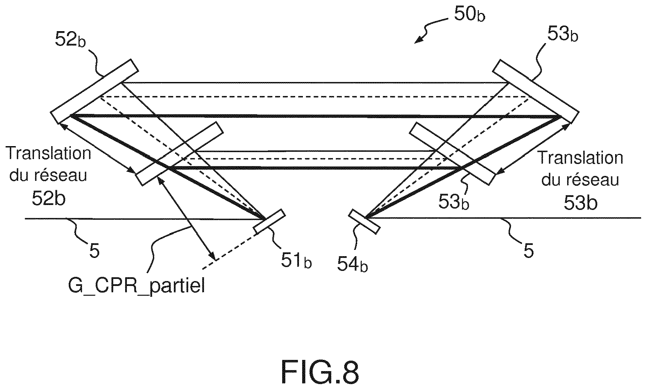

- le deuxième réseau de diffraction 52a est motorisé en translation selon la direction du rayon moyen correspondant à la longueur d'onde du centre du spectre entre 51a et 52a dans le cas d'un compresseur 50a à deux réseaux + dièdre de repli dont un exemple est montré figure 7, le dièdre 60a étant alors surdimensionné pour les mêmes raisons que l'étireur montré sur la figure 2, ou
- les deuxième et troisième réseaux de diffraction 52b, 53b sont motorisés en translation selon la direction du rayon moyen correspondant à la longueur d'onde du centre du spectre entre 52b et 53b dans le cas d'un compresseur 50b à deux paires de réseaux 51b, 52b, 53b, 54b comme montré sur la figure 8.

Cette chaîne amplificatrice selon l'invention permet à la fois d'éviter de motoriser un composant diffractif de l'étireur et d'utiliser des compresseurs intermédiaires ($30_1$ à $30_{M-1}$) aussi compacts que possible.

On va décrire un exemple de réalisation ayant comme spécifications :

- Spectre centré sur 800nm, gaussien, de largeur à mi-hauteur 60nm. Le vignettage du spectre 720-890nm doit être minimisé.
- 3 amplificateurs laser avec des cristaux Ti :Sa pompés par des lasers à 532nm.
- 3 compresseurs de sortie (un après chaque amplificateur laser).
- taux d'étirement minimum: tx_étirement_tenue_flux =9.58 ps/nm. Ce taux d'étirement permet de ne pas endommager les optiques des amplificateurs laser.

Paramètres des amplificateurs:

|  | énergie sortie ampli (J) | énergie sortie CPR (J) |
|---|---|---|
| sortie 1 | 3.6 | 2.5 |
| sortie 2 | 35.7 | 25 |
| sortie 3 | 357.1 | 250 |

On choisit de travailler avec des compresseurs à base de réseaux holographiques classiques, avec 1480 traits/mm.

L'angle d'incidence est choisi voisin de 56° (compromis entre efficacité de diffraction sur la bande spectrale utile, et limitation du vignetage).

La fluence maximale pour des réseaux de diffraction holographique est voisine de 110mJ/cm$^2$.

On obtient les diamètres suivants en entrée des 3 compresseurs :

|  | diamètre entrée CPR (mm) | surface (cm$^2$) |
|---|---|---|
| compresseur 1 | 48 | 18 |
| compresseur 2 | 152 | 182 |
| compresseur 3 | 481 | 1816 |

La distance G_CPR(3) = 980mm est fixée pour limiter le vignettage dans le compresseur n°3.

Le taux de compression du compresseur n°3 vaut 14.1 ps/nm. Il est donc plus élevé que nécessaire pour assurer seulement la tenue au flux c'est-à-dire plus grand que tx_étirement_tenue_flux =9.58 ps/nm.

Selon l'invention, l'étireur est conçu pour avoir le même taux d'étirement que le compresseur M en bout de chaîne, en l'occurrence le compresseur n° 3.

Quand les sorties 1 ou 2 sont utilisées l'impulsion laser est envoyée de l'étireur vers un dispositif de compression partielle afin que le taux d'étirement de l'étireur (14.1 ps/nm) moins le taux du dispositif de compression partielle (4.52 ps/nm) soit égal à tx_étirement_tenue_flux (9.58 ps/nm).

Les paramètres des différents éléments sont :

|  | $\theta$_ETR | N_ETR | G_ETR | Nbre pass | taux d'étirement (ps/nm) |
|---|---|---|---|---|---|
| Etireur | 56 ° | 1480 traits/mm | 490mm | 2 | 14.10 |

|  | $\theta$_CPR | N_CPR | G_CPR |  | taux compression (ps/nm) |
|---|---|---|---|---|---|
| CPR Partiel | 56 ° | 1480 traits/mm | 314 mm |  | 4.52 |
| CPR1 | 56 ° | 1480 traits/mm | 666 mm |  | 9.58 |
| CPR2 | 56 ° | 1480 traits/mm | 666 mm |  | 9.58 |
| CPR3 | 56 ° | 1480 traits/mm | 980 mm |  | 14.10 |

Le compresseur 3 est le donc bien le plus volumineux.

Dans cet exemple, les compresseurs 1 et 2 ont le même taux de compression ; le dispositif de compression partielle comporte alors un seul compresseur de taux constant.

## Revendications

1. Chaîne (100) amplificatrice d'une impulsion, à dérive de fréquence à M sorties, avec M>1, qui comprend :

   - un étireur (10) à taux d'étirement tx_etirement,
   - M amplificateurs en cascade ($20_1$, ....$20_M$),
   - M compresseurs de sortie ($30_1$, ....$30_M$) respectivement placés en sortie de chaque amplificateur, ladite chaîne amplificatrice comprenant en outre :
   - un dispositif (50) de compression partielle placé entre l'étireur et le premier amplificateur, ce dispositif de compression partielle ayant au moins un taux de compression partielle, le (ou les) taux de compression partielle étant inférieur(s) à tx_etirement, et
   - un commutateur optique (40) configuré pour recevoir un faisceau de sortie de l'étireur (10) et le diriger directement vers le premier amplificateur ($20_1$) de la cascade ou vers le dispositif (50) de compression partielle en fonction du compresseur de sortie choisi parmi les M compresseurs de sortie.

2. Chaîne amplificatrice selon la revendication précédente, **caractérisée en ce que** M>2, et **en ce que** le dispositif de compression partielle comporte un compresseur partiel (50a, 50b) à taux de compression réglable.

3. Chaîne amplificatrice selon la revendication précédente, **caractérisée en ce que** le compresseur partiel comporte au moins un réseau de diffraction motorisé en translation.

4. Chaîne amplificatrice selon la revendication 1, **caractérisée en ce que** M>2, et **en ce que** le dispositif de compression partielle comporte L compresseurs partiels à réseaux de diffraction, 1<L<M, chaque compresseur partiel ayant un taux de compression constant.

5. Chaîne amplificatrice selon l'une des revendications précédentes, configurée pour amplifier une impulsion de durée inférieure à 100 fs.

6. Procédé d'utilisation d'une chaîne amplificatrice d'une impulsion selon l'une des revendications précédentes, ledit procédé comportant les étapes suivantes :

EP 3 560 047 B1

- étirement de l'impulsion par l'étireur (10),
- en fonction d'un compresseur de sortie ($30_i$) choisi parmi lesdits compresseurs de sortie, envoi de l'impulsion au dispositif de compression partielle (50) par le commutateur optique (40) ou passage direct à l'étape suivante,
- envoi de l'impulsion dans la cascade des amplificateurs à partir du premier amplificateur ($20_1$) jusqu'à l'amplificateur ($20_i$) associé au compresseur de sortie choisi ($30_i$),
- envoi de l'impulsion vers ledit compresseur de sortie choisi ($30_i$).

## Patentansprüche

1. Kette (100) zur Verstärkung eines Impulses mit Frequenzdrift mit M Ausgängen, wobei M>1, Folgendes umfassend :

   - eine Streckvorrichtung (10) mit Streckrate tx_Streckung,
   - M in Kaskade geschaltete Verstärker ($20_1$, ....$20_M$),
   - M Ausgangskompressoren ($30_1$, ....$30_M$), jeweils platziert am Ausgang eines jeden Verstärkers, wobei die Verstärkungskette ferner Folgendes umfasst:
   - eine Teil-Kompressionsvorrichtung (50), platziert zwischen der Streckvorrichtung und dem ersten Verstärker, wobei die Teil-Kompressionsvorrichtung mindestens eine Teil-Kompressionsrate aufweist, wobei die Teil-Kompressionsrate(n) die Streckrate tx_Streckung unterschreitet/unterschreiten, und
   - einen optischen Umschalter (40), konfiguriert zum Empfangen eines Ausgangsstrahls der Streckvorrichtung (10) und zum Richten desselben direkt auf den ersten Verstärker ($20_1$) der Kaskade oder auf die Teil-Kompressionsvorrichtung (50) entsprechend dem aus den M Ausgangskompressoren gewählten Ausgangskompressor.

2. Verstärkungskette nach dem vorhergehenden Anspruch, **dadurch gekennzeichnet, dass** M>2 und dadurch, dass die Teil-Kompressionsvorrichtung einen Teil-Kompressor (50a, 50b) mit einstellbarer Kompressionsrate umfasst.

3. Verstärkungskette nach dem vorhergehenden Anspruch, **dadurch gekennzeichnet, dass** der Teil-Kompressor mindestens ein motorisiert verschiebbares Beugungsnetzwerk umfasst.

4. Verstärkungskette nach Anspruch 1, **dadurch gekennzeichnet, dass** M>2 und dadurch, dass die Teil-Kompressionsvorrichtung L Teil-Kompressoren mit Beugungsnetzwerk umfasst, wobei 1<L<M, wobei jeder Teil-Kompressor eine konstante Kompressionsrate aufweist.

5. Verstärkungskette nach einem der vorhergehenden Ansprüche, konfiguriert zum Verstärken eines Impulses mit einer Dauer unter 100 fs.

6. Verfahren zur Benutzung einer Verstärkungskette eines Impulses nach einem der vorhergehenden Ansprüche, wobei das Verfahren Folgende Schritte umfasst:

   - Strecken des Impulses durch die Streckvorrichtung (10),
   - angesichts eines Ausgangskompressors ($30_i$), welcher unter den Ausgangskompressoren gewählt ist, Senden des Impulses an die Teil-Kompressionsvorrichtung (50) durch den optischen Umschalter (40) oder direkter Übergang zum nächsten Schritt,
   - Senden des Impulses in der Verstärkerkaskade vom ersten Verstärker ($20_1$) bis zum Verstärker ($20_i$), welcher dem gewählten Ausgangskompressor ($30_i$) zugeordnet ist,
   - Senden des Impulses an den gewählten Ausgangskompressor ($30_i$).

## Claims

1. An M-output, where M>1, pulse amplification chain (100) with frequency drift, comprising:

   - a stretcher (10) of stretching factor tx_stretch,
   - M amplifiers ($20_1$, ....$20_M$) in cascade,
   - M output compressors ($30_1$, ....$30_M$) respectively placed at the output of each amplifier,
   said amplification chain further comprising:
   - a partial compression device (50) placed between the stretcher and the first amplifier, this partial compression device having at least one partial compression ratio, the one (or more) partial compression ratio(s) being lower than tx_stretch, and
- an optical switch (40) configured to receive a beam output from the stretcher (10) and to direct it directly to the first amplifier ($20_1$) of the cascade or to the partial compression device (50) depending on the output compressor chosen among the M output compressors.

2. The amplification chain according to the preceding claim, **characterized in that** M>2, and **in that** the partial compression device has a partial compressor (50a, 50b) of adjustable compression ratio.

3. The amplification chain according to the preceding claim, **characterized in that** the partial compressor has at least one translationally motorized diffraction grating.

4. The amplification chain according to claim 1, **characterized in that** M>2, and **in that** the partial compression device has L diffraction grating partial compressors, with 1<L<M, each partial compressor having a constant compression ratio.

5. The amplification chain according to one of the preceding claims, configured to amplify a pulse of duration shorter than 100 fs.

6. A method for using a pulse amplification chain according to one of the preceding claims, said method including the following steps:

   - stretching the pulse with the stretcher (10),
   - depending on an output compressor ($30_i$) chosen among said output compressors, sending the pulse to the partial compression device (50) via the optical switch (40) or passing directly to the following step,
   - sending the pulse through the cascade of amplifiers, from the first amplifier ($20_1$) to the amplifier ($20_i$) associated with the chosen output compressor ($30_i$),
   - sending the pulse to said chosen output compressor ($30_i$).

FIG.1

FIG.2

**FIG.3**

**FIG.4**

FIG.5

52$_a$

50$_a$

60$_a$

G_CPR_partiel

5

51$_a$

## FIG.6

52$_a$

50$_a$

52$_a$

Translation
du réseau
52a

60$_a$

5

51$_a$

## FIG.7

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130223460 A1

- US 20050265407 A1